Europäisches Patentamt

European Patent Office

Office européen des brevets

(11) Publication number: **0 110 700**
A2

# (12) EUROPEAN PATENT APPLICATION

(21) Application number: **83307237.4**

(22) Date of filing: **28.11.83**

(51) Int. Cl.³: **A 23 L 1/164**, A 23 L 1/18

(30) Priority: **29.11.82 US 444911**

(43) Date of publication of application: **13.06.84**
**Bulletin 84/24**

(84) Designated Contracting States: **AT BE CH DE FR GB IT LI LU NL SE**

(71) Applicant: **GENERAL FOODS CORPORATION, 250 North Street, White Plains, N.Y. 10625 (US)**

(72) Inventor: **Meczkowski, Frank Joseph, 38-1/2 Rose Street, Battle Creek Michigan 49107 (US)**

(74) Representative: **Baillie, Iain Cameron et al, c/o Ladas & Parry Isartorplatz 5, D-8000 München 2 (DE)**

(54) **A process for flavoring cereals.**

(57) A method of flavor coating a comestible which minimizes the loss of flavoring material that occurs when the solution containing the flavoring material is atomized. The solution containing the flavoring material comprises a flavor-retaining substance.

EP 0 110 700 A2

'ASE 2970

## DESCRIPTION

## A PROCESS FOR FLAVORING CEREALS

TECHNICAL FIELD

This invention relates to a process for flavoring cereal bodies such as cereal flakes, puffed cereals, and other cereal forms.

As flavoring substances are volatile, and frequently easily oxidized, food processors commonly encounter difficulties when flavoring foods. To remedy these problems, food processors have frequently turned to the use of artificial flavors and preservatives. As artificial flavors generally are highly concentrated and inexpensive per use, the processors can afford to use an excess of the added flavor. This excess compensates for flavor loss that occurs both during the application of the flavors to the cereal, and during the shelf life of the flavored cereal product. The preservatives are added to prevent the oxidation of these highly concentrated flavors.

The food processors have also found that flavors could be preserved by encapsulation and micro-encapsulation. In these processes, the volatile flavors are coated with a protective film. This film is formed from an edible, hydrophilic colloid. Typically the processor dispenses the flavoring materials as micro-droplets throughout a matrix of the colloid. Thereafter, the mixture is dried until enough water has been removed so as to form a dry granular product. When using these encapsulated flavors, the food processor must keep these granules dry, as moisture rapidly dissolves the film barrier and releases the flavor.

However, changing consumer demands have caused food processors to reevaluate many products and processes. Generally, the consumer is searching for those products that are flavored with natural materials in preferance to those products flavored with the synthetic analogs to the corresponding natural flavor. Thus, solutions to flavor use problems that depend upon the using of artificial flavors are in danger of becoming obsolete. Furthermore, there are no apparent, low cost means of adopting the encapsulating technology to the process of flavoring cereals due to the moisture involved in most cereal processing steps.

Additionally, current consumer demands also make it attractive to add the natural flavors without increasing the cereal's sugar content. In fact, many consumers would prefer a reduction in the cereal's sugar content. Consequently, it is desirable that a new process for adding natural flavors to cereals which does not require sugar addition become available.

## DISCLOSURE OF THE INVENTION

The instant invention provides a means for flavor coating ready-to-eat cereals with a reduced loss of flavorings. The flavorings can be either natural, artificial, or a combination of these flavorings and can be applied with conventional cereal coating apparatus.

0110700

One practicing the process of the instant invention would dissolve or suspend up to about 10%, by weight, of a flavor-retaining substance in a volume of an aqueous media. To this combination, one would then add flavorings and mix the total combination thoroughly. Once thoroughly mixed, the combination is then applied to a cereal body by any of the conventional cereal coating procedures.

For the purposes of the instant invention, the verb to dissolve and its derivatives include the verb to suspend and the respective derivatives thereof.

This invention relates to flavoring cereal bodies, especially ready-to-eat cereals such as flakes and puffs. To flavor cereals according to the instant invention, an aqueous, flavor-retaining substance solution is made. Typically, the flavor-retaining substance is: an extrudate, an extract, a starch, a fermentation product, or a dextrin. Preferably, the flavor-retaining substance is: a plant extrudate, such as gum arabic; an extract, such as agar, alginate, carrageenan, pectin, or gelatin; a starch or flour, such as locust bean gum, carob bean gum or guar gum; a fermentation product, such as dextran or xanthan; a synthetic gum, such as methyl- or carboxymethyl-cellulose; or a dextrin, such as corn syrup. It is more preferred that the flavor retaining substance be an extrudate, an extract, a starch, or a fermentation product, and it is most preferred that the flavor-retaining substance be an extrudate, an extract or a synthetic gum. It is further preferred that the flavor retaining substance be gum arabic, carrageenan, carboxymethylcellulose or guar gum.

If the flavor-retaining substance is a dextrin, it is preferred that the weight of dextrin added to the aqueous media be between about 0.5% and about 10% of the aqueous media weight. It is more preferred that the dextrin weight be between about 1.0% and about 5% of the aqueous media weight.

If the flavor-retaining substance is a starch or fermentation product, it is preferred that the weight of the flavor-retaining substance added to the aqueous media be between about 0.5% and about 5% of the aqueous media weight. It is more preferred that the added starch or fermentation product be between about 0.8% and about 3% of the aqueous media weight.

If the flavor-retaining substance is an extrudate, extract, a synthetic gum, or combination thereof, it is preferred that the weight of the added flavor-retaining substance be between about 0.1% and about 3% of the aqueous media weight. It is more preferred that the added extrudate, extract, or synthetic gum be between about 0.4% and about 2% of the aqueous media weight. It is most preferred that the weight of the added extrudate, extract, or synthetic gum be between about 0.7% and about 1.5% of the aqueous media weight.

Furthermore, it is preferred that the aqueous media consist essentially of water.

The preferred order of steps in practicing the instant invention is to first make the above described, flavor-retaining substance aqueous solution. To this solution, flavoring materials are added, the new solution is thoroughly mixed, and the cereal bodies are then coated with this flavoring solution.

Either natural, artificial -- synthetic --, or a combination of natural and artificial flavors may be

- 5 -

0110700

added to flavor-retaining substance solution. If artificial flavors are added to the solution, it is preferred that the weight of the artificial flavor be between about 0.03% and about 2% of the solution weight it is added to. It is more preferred that the weight of the artificial flavors to be added be between about 0.04% and about 1.4% of the solution weight, and it is most preferred that the weight of the artificial flavors be between about 0.05% and about 1%.

If natural flavors are added to the solution, it is preferred that the weight of the flavors be between about 1% and about 5%, more preferably between about 1.5% and about 4%, and most preferred preferably between about 2% and about 3% of the solution weight.

The preferred flavors for use in the instant invention are fruit flavors, more preferably natural or natural and artificial fruit flavors, and most preferably, flavors for use in the instant invention are comprised essentially of natural fruit flavors.

Once the flavor-retaining substance solution with flavors has been prepared, cereal bodies, preferably ready-to-eat cereal bodies are coated with this solution by any conventional means. In one embodiment of the instant invention, cereal bodies are coated by spraying an atomized mist of the flavoring solution onto the cereal bodies. It is preferred that the cereal bodies have a moisture of about 3% or less before being coated. Furthermore, it is preferred that the coating process not raise the cereal body moisture above about 9%, and more preferably, the cereal body moisture is kept below about 7%. After the cereal bodies have been coated, 'the coated cereal bodies may be heated and dried, preferably, to a final moisture of about 3% or less. Nevertheless, if the cereal body is a puff, it is further preferred that the coated cereal body be dried to a final moisture of about 2% or less.

Additionally, the application, or applications of flavors to cereal bodies should result in the cereal body being: between about 0.5% and about 5%, preferably between about 0.8% and about 4%, and more preferably between about 1.4% and about 3% natural flavoring, between about 0.01% and about 2%, preferably between 0.05% and about 1%, and more preferably between about 0.05% and about 0.5%, artificial flavoring; or a combination of these amounts of natural and artificial flavoring where all of these percents are all by weight of the finished product.

When coating puffed cereals, it is especially important that the cereal moisture be kept low as moisture will readily disolve the puffed cereal and thereby collapse the cereal's structure. Consequently, it is within the scope of the instant invention to use a plurality of coatings with a drying step between each application of the flavoring solution.

BEST MODE FOR CARRYING OUT THE INVENTION

EXAMPLE 1

Gum arabic, 5 gm were added to 495 gm of 130°F (54°C) water and mixed until the gum was thoroughly dissolved.

The 10 gm of a natural apple flavor, was added to 20 gm of the gum arabic solution. Thereafter, the apple flavored gum arabic solution was sprayed as an atomized mist onto commerical Grape Nuts® in a candy coating reel so as to coat the Grape Nut® bod-

0110700

ies with a flavor coating. Once coated, the Grape Nut® bodies had a a final moisture of 7% and these Grape Nut® bodies contained 2%, by weight of natural apple flavors.

## EXAMPLE 2

Carrageenan gum, 5 gm, and 5 gm of carboxymethylcellulose are disolved in 490 gm of 110°F (43°C) water with mechanical aggitation. Separately, natural and artificial bannana flavors are blended and 5 gm of the banana flavor blend are added to 20 gm of the gum solution. The admixture is homoginized so as to uniformly disperse the flavor. Thereafter, this homogenized gum-flavor dispersion is sprayed as an atomized mist onto commerical bran flakes in a candy coating reel in a manner effective to give the cereal a 1%, by weight, flavoring coat. Once coated the cereal flakes are dried at 175°F (80°C) to a final moisture of 4.5%.

## EXAMPLE 3

A puffed corn cereal is coated according to Example 1 in a manner effective to give the cereal a 2%, by weight, flavor coat. The coated cereal is dried at 175°F (80°C) to a final moisture of 2%.

0110700

CLAIMS

1. A process for flavoring cereal bodies comprising the steps of, in the following order:

a) dissolving up to about 10% by weight of a flavor-retaining substance in an aqueous media;

b) adding a flavoring to the flavor-retaining substance solution; and

c) coating the cereal bodies.

2. A process according to claim 1 which further comprises the step of drying the coated cereal bodies.

3. A process according to claim 2 wherein the coated cereal bodies are dried to a final moisture of less than about 3%.

4. A product produced by the product of claim 1.

5. A process for flavoring cereal bodies comprising the steps of, in the following order:

a) disolving, between about 0.1% and about 3%, by weight, of a flavor-retaining substance chosen from the group comprising extrudates, extracts, synthetic gums, and combinations thereof, in an aqueous media;

b) adding a flavoring to the solution of step a); and

c) coating the cereal bodies with the flavored solution of step b).

6. A process according to claim 5 which further comprises the step of drying the coated cereal bodies to a final mositure of less than 3%.

7. A process according to claim 5 wich further comprises the step of predrying the cereal bodies to a moisture of less than 3% before coating.

8. A process according to claim 5 wherein the flavoring is either natural flavorings or a combination of natural and artificial flavorings.

9. A coated cereal according to the process of claim 5.

10. A coated cereal comprising a cereal body and coating wherein said coating is chosen from the group comprising plant extrudates, extracts, synthetic gums, and combinations thereof combined with a natural flavoring.